# EUROPÄISCHE PATENTSCHRIFT

(11) **EP 1 845 290 B1**
(45) Veröffentlichungstag und Bekanntmachung des Hinweises auf die Patenterteilung: **03.06.2009**
(21) Anmeldenummer: 07450070.3
(22) Anmeldetag: 13.04.2007
(51) Int. Cl.: F16J 15/28

(54) **Dichtung in Hochdruckeinrichtungen**
Seal in high pressure facilities
Joint dans des dispositifs à haute pression

(30) Priorität: 14.04.2006 AT 6542006
(43) Veröffentlichungstag der Anmeldung: 17.10.2007
(73) Patentinhaber: BHDT GmbH, 8605 Kapfenberg (AT)
(72) Erfinder: Karl, Reinhard, 3400 Klosterneuburg (AT); Trieb, Franz, 8605 Kapfenberg (AT); Retschnik, Gerald, 8712 Niklasdorf (AT)
(74) Vertreter: Wirnsberger, Gernot

(56) Entgegenhaltungen:
- EP-A1- 0 505 352
- AT-B- 400 973
- DE-A1- 1 963 710

## Beschreibung

Die Erfindung betrifft eine Dichtung von relativ zueinander bewegbaren Teilen von Hochdruckeinrichtungen, insbesondere von oszillierend bewegten Plungern von Hochdruckpumpen, für flüssige Medien, bestehend aus einem metallischen Hochdruckgefäß oder dgl. Zylinder, in dessen Öffnung der bewegbare Teil und koachsial um diesen zur Hochdruckseite hin eine Hülse, insbesondere eine metallische Büchse, einragt und ein metallischer Stützring am stirnseitigen Außenbereich der einragenden Hülse an der Innenoberfläche der Öffnung des Hochdruckgefäßes und an einem Ring bzw. einem Druckring anliegt, welcher Ring im Innenbereich bzw. in dem den bewegten Teil benachbarten, stirnseitigen Bereich mit der Hülse in Berührung steht.

Ein derartiges Dichtsystem ist beispielsweise in der EP 0 505 352 B1 beschrieben, wobei sich die gegenständliche Erfindung jedoch nicht ausschließlich auf diese Anordnung zum Abdichten von beweglichen Teilen von Hochdruckeinrichtungen bezieht.

Die Wirkungsweise einer Hochdruckdichtung nach außen hin ist im Wesentlichen darin zu sehen, dass eine Abdichtung für flüssige Medien mit Drücken bis 1000 MPa, vorzugsweise mit solchen von 300 bis 600 MPa, zwischen einem Hochdruckgefäß oder Hochdruckzylinder und einem in diesen einragenden, bewegten Teil, insbesondere Plunger, durch eine zumeist das Teil führende Büchse oder Hülse erfolgt, die einerseits eine Dichtfunktion zum bewegten Teil hin aufweist und andererseits mit einem Dichtring bzw. Stützring zur Innenoberfläche der Bohrung im Hochdruckgefäß dichtend zusammenwirkt. Ein vorragender Teil der Büchse oder Hülse und der Dicht- oder Stützring werden durch einen Ring oder Druckteil vom Hochdruckbereich her kräftemäßig beaufschlagt und dichtend gegen das bewegte Teil und an die Innenoberfläche der Bohrung angestellt.

An der Kontaktfläche zwischen Dicht- bzw. Stützring und der Innenoberfläche der Bohrung bzw. des Zylinders werden gegebenenfalls nach unterschiedlichen Betriebszeiten einer Pumpanlage Verschleißerscheinungen durch Materialabtragung von beiden Teilen festgestellt. Ein derartiger Verschleiß kann nach kürzeren oder längeren Betriebszeiten zu einem Ausfall des Dichtungssystems führen.

Intensive tribologische Untersuchungen haben jedoch keinerlei eindeutige Zusammenhänge zwischen der Verschleißart, der Verschleißgeschwindigkeit, den Werkstoffen von Druckzylinder sowie Stützring und den Druckflüssigkeits- bzw. Presswasserkonditionen gezeigt.

Die Ursache der Verschleißerscheinungen an den Kontaktflächen zwischen der Wandung des Hochdruckgefäßes und dem Dicht- bzw. Stützring konnte wissenschaftlich noch nicht geklärt werden, weil einerseits das tribologische Beanspruchungskollektiv gemäß DIN 50320 nicht abschätzbar ist und andererseits bisherige Maßnahmen zur Problembewältigung keinerlei Lösungsansätze zeigten.

Es ist nun Aufgabe der Erfindung, den Verschleiß und die oft stellenweise Materialabtragung im Kontaktbereich zwischen Druckgefäß und Dicht- bzw. Stützring bei schwellender Druckbelastung weitestgehend zu vermeiden und derart die Funktionsdauer der Dichtung von Hochdruckeinrichtungen zu steigern.

Diese Aufgabe wird dadurch gelöst, dass zumindest die Außenfläche vom Stützring und/oder zumindest die an dem Stützring anliegende Innenfläche der Öffnung des Hochdruckgefäßes mindestens eine nach einem PVD (Physical Vapour Deposition)- und/oder CVD (Chemical Vapour Deposition)- und/oder nach einem PACVD (Plasma Assisted Chemical Vapour Deposition)-Verfahren aufgebrachte Beschichtung aufweist.

Die erfindungsgemäße Beschichtung der Außenfläche des Stützringes und/oder der Innenoberfläche der Öffnung des Hochdruckgefäßes bzw. des Hochdruckzylinders schafft im Bereich der Berührung der Teile überraschend eine günstige Verschleißcharakteristik bei gegebenem tribologischem Beanspruchungskollektiv.

Obwohl die Tatsache und das Ausmaß einer Kontaktdeformation nach der Hertz'schen Theorie sowie ein Prall- und Stoßverschleiß und jene einer Reibung trotz höchstmöglicher Stabilität einer Festlegung der Teile, welche bisher die Materialschädigungen verursachen konnte, also die Verschleißmechanismen wie Abrasion, Oberflächenzerrüttung, Adhäsion oder tribologische Reaktionen, noch nicht geklärt sind, konnte mit einer erfindungsgemäßen Beschichtung ein hoher Verschleißschutz erreicht werden. Kleinflächige Materialabtragungen an der Kontaktfläche konnten auch nach langer Betriebszeit der Hochdruckeinrichtung weder an der Bohrungsfläche noch an der Stützringfläche festgestellt werden, auch wenn nur eine der Flächen erfindungsgemäß beschichtet war.

Ohne ausreichende technisch-wissenschaftliche Beweise für eine Wirkungsweise der Beschichtung kann angenommen werden, dass die Schicht als Behinderung einer örtlichen Pressschweißverbindung der Werkstoffe, als Diffusionssperre an den Oberflächen und als Reibungsminderung bei einer Gleichbewegung der Teile bei hohen Kontaktdrücken wirksam ist.

Um bei einer zwar flächigen, jedoch hohen, spezifischen Belastung ein Durchbrechen der Beschichtung in Folge von Verformungen des Substrates zu verhindern und somit die Funktionsdauer der Dichtung zu verlängern, ist von Vorteil, wenn der Stützring und/oder das Hochdruckgefäß mit der Öffnung aus einem nichtrostenden Stahl mit einer Härte von mehr als 28 HRC gebildet sind, vorzugsweise aus einem nichtrostenden Stahl mit Sonderzusätzen, insbesondere aus einem Stahl nach DIN Werkstoff Nr. 1.4545 bestehen.

Dadurch ist es auch möglich, nachteilig wirkende Korrosionserscheinungen, die insbesondere bei einem Stillstand der Hochdruckpumpe auftreten können, zu minimieren.

Als besonders vorteilhaft für lange Betriebszeiten bei Voll-Last hat sich im praktischen Betrieb herausgestellt, wenn die Beschichtung aus mehreren Einzelschichten, als sogenannte "Multiple Layer"-Schicht, gebildet ist.

Wenn, wie in günstiger Weise im Hinblick auf einen mit Chrom legierten Stahl als Basiswerkstoff vorgesehen sein kann, die Beschichtung oder zumindest eine Schicht derselben als Karbid-, Nitrid- oder Karbonitridschicht gebildet ist, ergeben sich dadurch hochharte Beschichtungen mit verbesserten Friktionseigenschaften und/oder einer dgl. Stabilität derselben und eine wesentlich verlängerte Haltbarkeit auch im unterbrochenen Betrieb.

Als besonders vorteilhaft für eine Verschleißminimierung der Kontaktflächen hat sich herausgestellt, wenn die Beschichtung oder die mit der Teilfläche verbundene Innenschicht der Mehrlagenbeschichtung mit Chromnitrid gebildet ist. Derart kann offensichtlich eine besonders gute Haftung der Beschichtung an der Teiloberfläche, insbesondere aus einer chromhaltigen, ausscheidungshärtenden Legierung erreicht werden.

Bei einer weiteren bevorzugten Ausführungsform der Erfindung hat sich gezeigt, dass, wenn eine Beschichtung oder die Außenschicht der Mehrlagenbeschichtung als metallhaltige oder metallfreie Kohlenstoffschicht mit amorphem Kohlenstoff bzw. diamondlike-carbon (DLC) gebildet ist, auch bei unreinen flüssigen Medien eine Haltbarkeit der Dichtung wesentlich erhöht wird.

Ein vorteilhaftes Dichtungsverhalten bei geringem Verschleiß der Pressflächen wurde gefunden, wenn die Außenfläche vom Stützring und die Innenfläche der Öffnung eine Chromnitrid (CrN)-Beschichtung tragen.

Obwohl die CrN-Schichtwerkstoffe im Vergleich mit anderen Schichtmaterialien nur eine geringe Mikrohärte (HV 0.05) von etwa 1750 besitzen, hat sich bei einer Beschichtung beider Kontaktflächen eine wesentlich verbesserte Langzeit-Dichtwirkung ergeben.

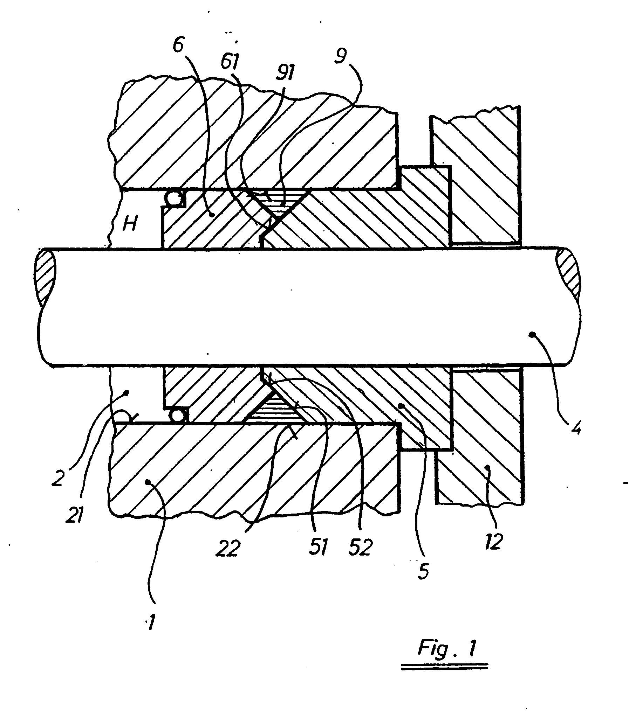

Mittels der Fig. 1, welche schematisch eine Ausführungsform einer Anordnung zum Abdichten von beweglichen Teilen von Hochdruckeinrichtungen gemäß EP 0 505 352 B1, und zwar eine Hochdruckpumpe mit bewegten Plunger zeigt, soll die erfindungsgemäße Dichtung näher erläutert werden.

Eine nachfolgende Bezugszeichenliste soll eine Hilfestellung bei einer Zuordnung der Teile oder Teilflächen sein.

### Bezugszeichenliste:

- 1: Hochdruckgefäß oder Hochdruckzylinder
- 12: Halterungselement
- 2: Öffnung oder Bohrung im Hochdruckgefäß
- 21: Innenoberfläche der Öffnung
- 22: Innenoberfläche der Öffnung im Dichtbereich
- 4: bewegbares Teil
- 5: Hülse bzw. metallische Büchse
- 51: stirnseitiger Außenbereich der Hülse
- 52: stirnseitiger Innenbereich der Hülse, dem bewegbaren Teil benachbart
- 6: Ring bzw. Druckring
- 61: Innenbereich der Druckfläche des Ringes
- 9: Stützring bzw. Dichtmittel
- 91: Außenfläche des Stützringes
- H: Hochdruckseite

Bei einer in Fig. **1** gezeigten Dichtung eines Hochdruckgefäßes **1** und eines bewegbaren Teiles ist eine Hülse **5** einragend in eine Bohrung **2** eines Hochdruckgefäßes **1** durch ein lösbares Halterungselement **12** stabil und im Wesentlichen bewegungsfrei festgelegt.

Stirnseitig zur Hochdruckseite **H** hin weist die Hülse **5** eine Kegelfläche **51, 52** auf, wobei ein Außenbereich **51** derselben einerseits und eine Außenfläche einer Hülse **5** andererseits mit einem im gegebenen Fall im Querschnitt dreieckigen Stützring **9** zusammenwirken. Dabei wird eine zylindrische Außenfläche **91** eines Stützringes **9** an die Innenoberfläche **22** einer Bohrung **2** pressend angestellt, weil ein Ring bzw. Druckring **6** von der Hochdruckseite **H** druckbeaufschlagt ist.

Berührungs- und Dichtflächen von Hochdruckeinrichtungen **1** zwischen Teilen aus Metall, wie insbesondere ein Stützring **9,** und der Fläche **22** einer Bohrung **2** können unabhängig von einer Form des Stützringes **9** zu Verschleißerscheinungen führen. Gemäß der Erfindung weist zumindest ein Teil im Berührungs- oder Dichtbereich der metallischen Teile eine PVC- und/oder CVD- und/oder PACVD-Beschichtung auf, vorzugsweise jeweils eine Chromnitrid (CrN)-Beschichtung mit einer Schichtdicke von jeweils 1 µm bis 5 µm.

Die Verfahren und eine Ausbildung einer jeweiligen Beschichtung nach der Erfindung sowie die Bedingungen dafür sind Stand der Technik und zählen zum Wissen des Fachmannes. Dies gilt sowohl für Nitrid-, Karbid-, Karbonitrid- und gegebenenfalls Verbindungen mit Oxid und dgl. Schichten als auch für eine metallhaltige und/oder metallfreie Kohlenstoffschicht einer z.B. "Multiple Layer"-Beschichtung.

## Patentansprüche

1. Dichtung für relativ zueinander bewegbare Teile von Hochdruckeinrichtungen, insbesondere von oszillierend bewegten Plungern von Hochdruckpumpen, für flüssige Medien, wobei die Dichtung aus einem metallischen Hochdruckgefäß (1) oder dgl. Zylinder, in dessen Öffnung (2) der bewegbare Teil (4) anordenbar ist, einer Hülse (5), insbesondere einer metallischen Büchse, die koachsial um diesen zur Hochdruckseite (H) hin einragt, einem Ring (6) bzw. einem Druckring und einem metallischen Stützring (9) besteht, wobei der Stützring (9) am stirnseitigen Außenbereich (51) der einragenden Hülse (5) an der Innenoberfläche (22) der Öffnung (2) des Hochdruckgefäßes (1) und am Ring (6) bzw. dem Druckring anliegt, welcher Ring (6) im Innenbereich (61) bzw. in dem dem bewegten Teil (4) benachbarten, stirnseitigen Bereich (52) mit der Hülse (5) in Berührung steht, **dadurch gekennzeichnet, dass** zumindest die Außenfläche (91) vom Stützring (9) und/oder zumindest die an dem Stützring (9) anliegende Innenfläche (22) der Öffnung (2) des Hochdruckgefäßes (1) mindestens eine nach einem PVD (Physical Vapour Deposition)- und/oder CVD (Chemical Vapour Deposition)- und/oder nach einem PACVD (Plasma Assisted Chemical Vapour Deposition)-Verfahren aufgebrachte Beschichtung aufweist.

2. Dichtung nach Anspruch 1, **dadurch gekennzeichnet, dass** der Stützring (9) und/oder das Hochdruckgefäß (1) mit der Öffnung (2) aus einem nichtrostenden Stahl mit einer Härte von mehr als 28 HRC gebildet sind, vorzugsweise aus einem nichtrostenden Stahl mit Sonderzusätzen, insbesondere aus einem Stahl nach DIN Werkstoff Nr. 1.4545 bestehen.

3. Dichtung nach Anspruch 1 oder 2, **dadurch gekennzeichnet, dass** die Beschichtung aus mehreren Einzelschichten, als sogenannte "Multiple Layer"-Schicht, gebildet ist.

4. Dichtung nach einem der Ansprüche 1 bis 3, **dadurch gekennzeichnet, dass** die Beschichtung oder zumindest eine Schicht derselben als Karbid-, Nitrid- oder Karbonitridschicht gebildet ist.

5. Dichtung nach einem der Ansprüche 1 bis 4, **dadurch gekennzeichnet, dass** die Beschichtung oder die mit der Teilfläche verbundene Innenschicht der Mehrlagenbeschichtung mit Chromnitrid gebildet ist.

6. Dichtung nach einem der Ansprüche 1 bis 5, **dadurch gekennzeichnet, dass** die Beschichtung oder die Außenschicht der Mehrlagenbeschichtung als metallhaltige oder metallfreie Kohlenstoffschicht gebildet ist.

7. Dichtung nach einem der Ansprüche 1 bis 6, **dadurch gekennzeichnet, dass** die Außenfläche (91) vom Stützring (9) und die Innenfläche (22) der Öffnung (2) eine CrN- . Beschichtung tragen.

## Claims

1. A seal for parts of high-pressure devices which can be moved relative to one another, in particular of oscillating plungers of high-pressure pumps, for fluid media, wherein the seal consists of a metal high-pressure vessel (1) or similar cylinder, in the opening (2) whereof the movable part (4) can be disposed, a sleeve (5), in particular a metal bushing which projects coaxially around said part towards the high-pressure side (H), a ring (6) or a pressure ring and a metal supporting ring (9), wherein the supporting ring (9) on the front-side outer region (51) of the projecting sleeve (5) abuts against the inner surface (22) of the opening (2) in the high-pressure vessel (1) and against the ring (6) or the pressure ring, which ring (6) is in contact with the sleeve (5) in the inner region (61) or in the front-side region (52) adjacent to the moving part (4), **characterised in that** at least the outer surface (91) of the supporting ring (9) and/or at least the inner surface (22) of the opening (2) in the high-pressure vessel (1) which abuts against the supporting ring (9) has at least one coating applied by a PVD (physical vapour deposition) and/or CVD (chemical vapour deposition) and/or a PACVD (plasma assisted chemical vapour deposition) method.

2. The seal according to claim 1, **characterised in that** the supporting ring (9) and/or the high-pressure vessel (1) with the opening (2) are formed from a stainless steel having a hardness greater than 28 HRC, particularly from a stainless steel having special additives, in particular from a steel according to DIN material No. 1.4545.

3. The seal according to claim 1 or 2, **characterised in that** the coating is formed from a plurality of individual layers, as a so-called "multiple layer" coating.

4. The seal according to any one of claims 1 to 3, **characterised in that** the coating or at least one layer of the same is formed as a carbide, nitride or carbonitride layer.

5. The seal according to any one of claims 1 to 4, **characterised in that** the coating or the inner layer of the multilayer coating connected to the partial surface is formed with chromium nitride.

6. The seal according to any one of claims 1 to 5, **characterised in that** the coating or the outer layer of the multi-layer coating is formed as a metal-containing or metal-free carbon layer.

7. The seal according to any one of claims 1 to 6, **characterised in that** the outer surface (91) of the supporting ring (9) and the inner surface (22) of the opening (2) have a CrN coating.

## Revendications

1. Joint d'étanchéité pour des pièces mobiles les unes par rapport aux autres de dispositifs à haute pression, notamment des pistons plongeurs mus par des oscillations de pompes à haute pression, pour des milieux liquides, moyennant quoi le joint d'étanchéité est constitué d'un contenant à haute pression (1) métallique ou d'un cylindre similaire, dans l'ouverture (2) duquel la pièce mobile (4) peut être disposée, d'un manchon (5), notamment un fourreau métallique, qui dépasse coaxialement autour de celui-ci en allant vers le côté de haute pression(H), d'un anneau (6) respectivement d'un anneau de pression et d'un anneau d'appui métallique (9), moyennant quoi l'anneau d'appui (9) repose sur la zone extérieure frontale (51) du manchon (5) dépassant sur la surface intérieure (22) de l'ouverture (2) du contenant à haute pression (1) et sur l'anneau (6) respectivement l'anneau de pression, lequel anneau (6) vient en contact avec le manchon (5) dans la zone intérieure (61) respectivement dans la zone frontale (52), voisine de la pièce mobile (4), **caractérisé en ce que** au moins la surface extérieure (91) de l'anneau d'appui (9) et/ou au moins la surface intérieure (22) reposant sur l'anneau d'appui (9) de l'ouverture (2) du contenant à haute pression (1) présente au moins un revêtement appliqué selon un procédé de dépôt physique en phase gazeuse (PVD, Physical Vapour Deposition) et/ou de dépôt chimique en phase vapeur (CVD, Chemical Vapour Deposition) et/ou de dépôt chimique en phase vapeur assisté au plasma (PACVD, Plasma Assisted Chemical Vapour Deposition).

2. Joint d'étanchéité selon la revendication 1, **caractérisé en ce que** l'anneau d'appui (9) et/ou le contenant haute pression (1) sont formés avec l'ouverture (2) dans un acier inoxydable avec une dureté de plus de 28 HRC, de préférence dans un acier inoxydable avec des additifs particuliers, notamment dans un acier selon la norme DIN de matériau Nr. 1.4545.

3. Joint d'étanchéité selon la revendication 1 ou 2, **caractérisé en ce que** le revêtement est formé par plusieurs couches individuelles, ce que l'on appelle le revêtement « multicouches ».

4. Joint d'étanchéité selon une des revendications 1 à 3, **caractérisé en ce que** le revêtement ou au moins une couche de celui-ci est formé en une couche de carbure, nitrure ou nitrure de carbone.

5. Joint d'étanchéité selon une des revendications 1 à 4, **caractérisé en ce que** le revêtement ou la couche intérieure reliée à la surface partielle du revêtement multicouches est formé en nitrure de chrome.

6. Joint d'étanchéité selon une des revendications 1 à 5, **caractérisé en ce que** le revêtement ou la couche extérieure du revêtement multicouches est formé comme une couche de carbone contenant du métal ou exempte de métal.

7. Joint d'étanchéité selon une des revendications 1 à 6, **caractérisé en ce que** la surface extérieure (91) de l'anneau d'appui (9) et la surface intérieure (22) de l'ouverture (2) portent un revêtement CrN.
